# FASCICULE DE BREVET EUROPEEN

(11) **EP 1 045 119 B1**
(45) Date de publication et mention de la délivrance du brevet: **02.07.2003**
(21) Numéro de dépôt: 00400979.1
(22) Date de dépôt: 10.04.2000
(51) Int. Cl.: F01N 11/00

(54) **Procédé et dispositif de diagnostic de l'état de fonctionnement d'un pot catalytique de traitement des gaz d'échappement d'un moteur à combustion interne**
Verfahren und Vorrichtung zur Diagnose des Betriebszustandes eines Abgaskatalysators einer Brennkraftmaschine
Method and device for diagnosing the operational condition of an exhaust gas catalytic converter of an internal combustion engine

(30) Priorité: 12.04.1999 FR 9904518
(43) Date de publication de la demande: 18.10.2000
(73) Titulaire: Renault s.a.s., 92100 Boulogne Billancourt (FR)
(72) Inventeur: von Wissel, Dirk, 92200 Neuilly s/Seine (FR); Beurthey, Stéphan, 91430 Vauhallan (FR); Kefti-Cherif, Ahmed, 78190 Trappes (FR)

(56) Documents cités:
- EP-A- 0 814 248
- FR-A- 2 746 142
- US-A- 5 771 685
- PATENT ABSTRACTS OF JAPAN vol. 1995, no. 11, 26 décembre 1995 (1995-12-26) & JP 07 208151 A (TOYOTA MOTOR CORP), 8 août 1995 (1995-08-08)
- PATENT ABSTRACTS OF JAPAN vol. 1997, no. 07, 31 juillet 1997 (1997-07-31) & JP 09 088560 A (NISSAN MOTOR CO LTD), 31 mars 1997 (1997-03-31)

## Description

La présente invention est relative à un procédé de diagnostic de l'état de fonctionnement d'un pot catalytique de traitement des gaz d'échappement d'un moteur à combustion interne et, plus particulièrement, à un tel procédé appliqué à un pot catalytique comprenant des moyens de stockage d'oxydes d'azote lorsque le moteur fonctionne en mélange air/carburant pauvre en carburant, lesdits oxydes d'azote stockés étant libérés et réduits chimiquement quand le moteur fonctionne en mélange riche en carburant. La présente invention est aussi relative à un dispositif pour la mise en oeuvre de ce procédé.

On connaît des moteurs thermiques à combustion interne conçus pour fonctionner avec un mélange air/carburant pauvre en carburant, c'est-à-dire avec un mélange dont la richesse en carburant est inférieure à celle d'un mélange stoechiométrique. Ces moteurs procurent évidemment des économies de carburant, mais le système de dépollution classiquement utilisé avec des mélanges stoechiométriques ne permet plus de traiter les oxydes d'azote (NOx).

Pour pallier cet inconvénient on a conçu des pots catalytiques de traitement des gaz d'échappement comprenant des moyens de stockage (ou de "piégeage") des oxydes d'azote lorsque le moteur fonctionne en mélange pauvre, oxydes qui sont déstockés, ou "libérés", quand le moteur fonctionne en mélange air/carburant riche ou, éventuellement, stoechiométrique. Les oxydes d'azote alors déstockés sont alors réduits chimiquement et transformés en espèces chimiques moins nocives voire inertes (azote).

On comprend que le respect des normes anti-pollution dépend alors étroitement du bon fonctionnement d'un tel pot catalytique, et notamment de sa capacité à stocker les oxydes d'azote en mélange pauvre. Ces normes imposent alors le plus souvent que des procédures de test du pot soient mises en oeuvre régulièrement de manière à diagnostiquer éventuellement la défaillance du pot, en vue de son remplacement.

A cet effet on connaît, notamment des documents de brevets JP 0988560, JP 07166851 et JP 07208151 des moyens de diagnostic de l'état de fonctionnement du pot, à partir de l'observation des évolutions du signal de sortie d'un capteur sensible à la concentration en NOx des gaz d'échappement sortant du pot.

Les moyens décrits dans ces documents ne tiennent cependant pas compte d'un phénomène propre à perturber le diagnostic établi, à savoir l'empoisonnement du pot par des oxydes de soufre (SOx). Cet empoisonnement réduit la capacité du pot à stocker les NOx en mélange pauvre et peut conduire alors les moyens évoqués ci-dessus à diagnostiquer une défaillance du pot.

On sait cependant que l'empoisonnement du pot par les oxydes de soufre n'est pas irréversible. A titre d'exemple, on décrit dans la demande de brevet français N° 98/06961 déposée le 3 juin 1998 au nom de la demanderesse, un procédé et un dispositif de purge en oxydes de soufre d'un pot catalytique du type décrit plus haut.

Le brevet US 5771685 enseigne un procédé de diagnostique d'un pot catalytique capable de stocker les oxydes d'azote utilisant les signaux d'au moins un capteur HEGO placé en aval du pot. Ce capteur permet de déterminer, lors d'une purge d'oxydes d'azote du pot, la quantité d'oxyde d'azote qui était stockée dans le pot. Les purges d'oxydes d'azote sont déclenchées selon un intervalle de temps ajusté en fonction de la capacité de stockage déterminé à partir des signaux du ou des capteur HEGO. Lorsque l'intervalle de temps entre deux purges d'oxydes d'azote est inférieur à une valeur déterminée, une purge des sulfures est déclenchée. La dégradation du pot catalytiques est détectée lorsque la fréquence des purges de sulfure dépassé un seuil déterminé.

La présente invention a donc pour but de fournir un procédé de diagnostic de l'état de fonctionnement d'un pot catalytique de ce type, qui permette de diagnostiquer avec sûreté cet état, sans que ce diagnostic ne soit faussé par le phénomène d'empoisonnement du pot par les oxydes de soufre.

On atteint ce but de l'invention, ainsi que d'autres qui apparaîtront à la lecture de la description qui va suivre, avec un procédé de diagnostic de l'état de fonctionnement d'un pot catalytique du type décrit en préambule de la présente description, ce procédé étant remarquable en ce que :
a) on mesure une grandeur représentative de la capacité du pot à stocker des oxydes d'azote lorsque le moteur fonctionne en mélange pauvre,
b) on commande une purge du pot en oxydes d'azote seuls ou, à la fois, en oxydes d'azote et en oxydes de soufre suivant que ladite capacité est supérieure ou inférieure à un seuil prédéterminé (SPS), et
c) on mesure de nouveau ladite grandeur prédéterminée, après ladite purge, et on diagnostique une défaillance du pot ou le bon état de fonctionnement de ce pot, suivant la position de cette mesure par rapport à un deuxième seuil prédéterminé (SD).

Comme on le verra plus loin en détail, la purge en oxyde de soufre organisée par le procédé suivant l'invention permet d'éviter la production d'un diagnostic de fonctionnement défectueux du pot quand une telle purge est susceptible de reconditionner le pot dans un état de fonctionnement correct, quant à sa capacité à stocker les oxydes d'azote en mélange pauvre.

Suivant d'autres caractéristiques du procédé selon l'invention, avant l'étape a) décrite ci-dessus, on mesure la quantité d'oxydes d'azote contenue dans les gaz d'échappement à la sortie du pot et on la compare à un seuil (SN) prédéterminé, et à l'étape a), on mesure ladite grandeur si ladite quantité est supérieure audit seuil (SN).

Ce seuil est relatif à la concentration en oxydes d'azote des gaz d'échappement ou à la masse desdits oxydes présents dans ces gaz, cumulée sur un intervalle de temps prédéterminé.

Pour la mise en oeuvre de ce procédé l'invention fournit un dispositif comprenant des moyens pour délivrer des signaux S1 et S2 représentatifs respectivement des quantités d'oxydes d'azote et d'oxygène contenues dans les gaz d'échappement sortant du pot catalytique, des moyens de calcul alimentés par lesdits signaux S1 et S2 pour en déduire des signaux de commande de la richesse en carburant du mélange air/carburant d'alimentation du moteur et de l'avance à l'allumage dudit mélange, propres à commander sélectivement une purge du pot en oxydes d'azote seuls ou une purge du pot à la fois en oxydes d'azote et en oxydes de soufre, lesdits moyens de calcul comprenant en outre des moyens d'exécution d'un programme de diagnostic de l'état de fonctionnement du pot faisant sélectivement intervenir lesdites purges.

D'autres caractéristiques et avantages de la présente invention apparaîtront à la lecture de la description qui va suivre et à l'examen du dessin annexé dans lequel :
- la figure 1 est une représentation schématique d'un dispositif pour la mise en oeuvre du procédé suivant l'invention,
- les figures 2 et 3 sont des graphes utiles à la description de ce procédé,
- la figure 4 est un organigramme d'un programme de diagnostic suivant l'invention, exécuté par un calculateur formant partie du dispositif de la figure 1, et
- les figures 5 et 6 sont des variantes dune partie de l'organigramme de la figure 4.

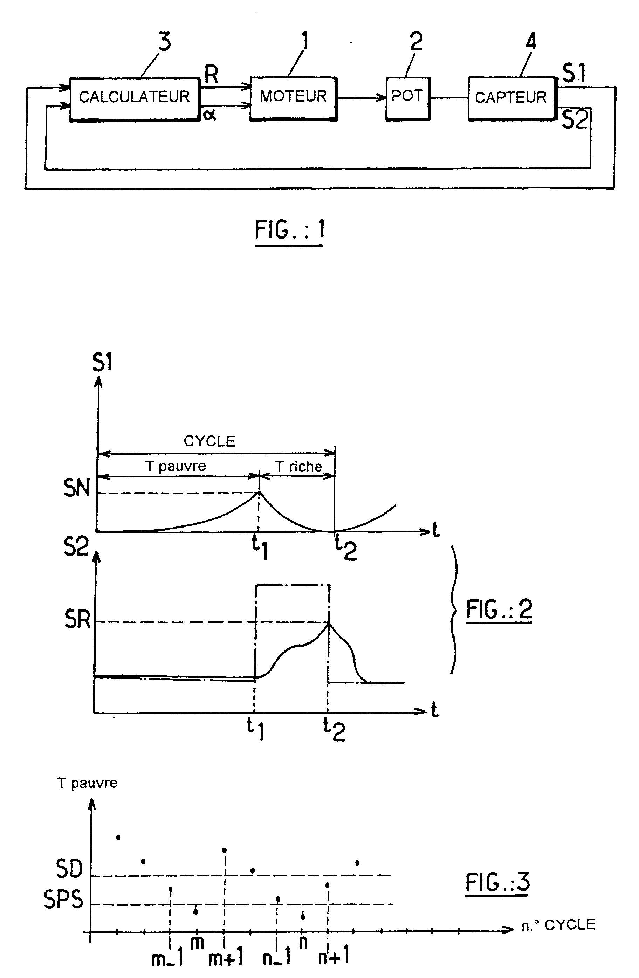

On se réfère à la figure 1 du dessin annexé où le dispositif représenté comprend un moteur à combustion interne 1 dont les gaz d'échappement sont traités dans un pot catalytique 2 à piégeage des NOx en mélange pauvre, tel que décrit plus haut. Un calculateur 3 gère le fonctionnement du moteur, et règle notamment la richesse R en carburant du mélange air/carburant consommé par le moteur, par exemple en réglant le temps d'ouverture d'injecteurs (non représentés) de carburant dans les cylindres de ce moteur. Le calculateur commande aussi classiquement l'angle α d'avance à l'allumage du mélange introduit dans ces cylindres.

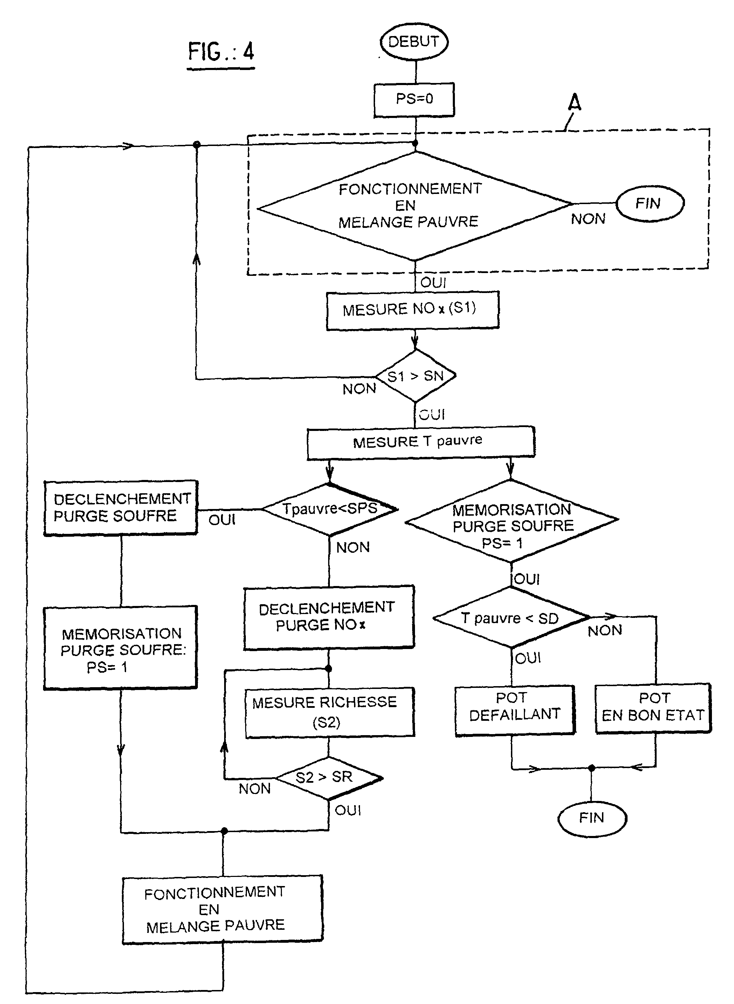

Suivant la présente invention, le calculateur 3 est en outre dûment programmé pour exécuter le programme de diagnostic de l'état de fonctionnement du pot 2 dont l'organigramme est représenté à la figure 4 et qui sera décrit en détail dans la suite. Pour ce faire le calculateur exploite des signaux de sortie S1 et S2 délivrés par un double capteur 4 (ou par deux capteurs distincts) et représentatifs de la concentration des gaz d'échappement en NOx et en oxygène respectivement.

Dans un dispositif tel que celui représenté à la figure 1, où le moteur commande la richesse R du mélange air/carburant d'alimentation du moteur en fonction de diverses stratégies, et notamment de stratégies de purge du pot en NOx ou en SOx qui exigent un passage temporaire en mélange air/carburant riche ou stoechiométrique, avant un retour en mélange pauvre, les signaux de sortie S1 et S2 du double capteur 4 évoluent dans le temps comme schématisé aux graphes de la figure 2, suivant des cycles successifs, alternant des temps de fonctionnement du moteur en mélange pauvre (Tpauvre) et des temps de fonctionnement en mélange riche (Triche) .

C'est ainsi que pendant un temps Tpauvre de fonctionnement en mélange pauvre, le signal S1 croît, alors que le signal S2 (en trait plein) reste à un niveau bas fixe, lié à la richesse sous-stoechiométrique du mélange "pauvre", alors fixée par le calculateur 3. Pendant ce temps Tpauvre, le pot absorbe les NOx et se sature progressivement en NOx alors que son efficacité de stockage des NOx décroît et que donc la concentration en NOx des gaz d'échappement croît. A l'instant t₁, le signal S1 franchit un seuil SN prédéterminé et le calculateur fait alors passer brusquement la richesse de consigne du mélange air/carburant (en trait mixte) à une valeur stoechiométrique ou surstoechiométrique, pour commander la libération des NOx stockées par le pot et leur réduction en espèces chimiquement nocives ou inoffensives. Le seuil SN peut être fonction de la température du pot. A l'instant t₁ la richesse S2 en oxygène des gaz d'échappement commence à croître progressivement pour suivre le brusque accroissement de la richesse de consigne du mélange air/carburant.

Simultanément la richesse en NOx des gaz d'échappement décroît du fait de leur réduction chimique, comme représenté à la figure 2.

La purge du pot en NOx est arrêtée par le calculateur quand, à l'instant t₂, le signal S2 atteint un seuil SR prédéterminé.

De ce qui précède, il ressort que la capacité du dispositif de la figure 1 à fonctionner en mélange pauvre, et donc la capacité du pot à stocker correctement les NOx alors émis, peut être alors mesurée par la durée du temps Tpauvre.

Suivant un mode de réalisation préféré de la présente invention, donné à titre d'exemple illustratif et non limitatif seulement, on évalue donc cette capacité du pot à fonctionner correctement à l'aide de la grandeur que constitue le temps Tpauvre.

Ceci posé on se réfère maintenant aux figures 3 et 4 pour expliciter plus avant les fondements de l'invention et, notamment, les moyens utilisés pour que le diagnostic à réaliser ne soit pas faussé par un empoisonnement du pot par des oxydes de soufre SOx.

On a représenté à la figure 3 l'évolution typique de la valeur de la grandeur Tpauvre lors de cycles successifs composés chacun d'un "temps pauvre" et d'un "temps riche" (voir figure 2). Au cours de tels cycles successifs, repérés par des numéros d'ordre croissants, Tpauvre a tendance à baisser, du fait de la perte d'efficacité du catalyseur. Au cycle m, Tpauvre devient inférieur à un seuil SPS prédéterminé.

Suivant la présente invention, le calculateur, qui mesure et conserve en mémoire les temps Tpauvre et Triche du cycle courant et du cycle précédent, au moins, réagit au passage de Tpauvre en dessous du seuil SPS en commandant une purge en soufre du pot catalytique.

Il s'agit en effet de savoir si le bas niveau de l'efficacité de stockage des NOx que révèle la valeur actuelle de Tpauvre n'est pas due à un empoisonnement temporaire du pot par les SOx, empoisonnement auquel la purge devrait alors porter remède.

Le calculateur 3 peut organiser une telle purge en SOx en commandant, à la fois, un enrichissement du mélange air/carburant d'alimentation du moteur et un accroissement de la température du pot, par exemple au-dessus de 650°C environ. Pour ce faire le calculateur peut réduire l'avance à l'allumage α de manière à dégrader la combustion du mélange air/carburant du moteur en rendant celle-ci plus exothermique, comme décrit dans la demande de brevet français N° 98/06961 précitée déposée au nom de la demanderesse. D'autres moyens de réchauffage du pot pourraient être utilisés, en lieu et place de celui décrit ci-dessus.

A la suite de cette purge, au cycle m+1, le calculateur compare la valeur actuelle de Tpauvre à une valeur de seuil prédéterminée SD, supérieure à SPS, considérée comme constituant une limite en dessous de laquelle il y a émission par le calculateur 3 d'un diagnostic de mauvais fonctionnement du pot 2.

A la figure 3 il apparaît qu'au cycle m+1, Tpauvre est plus grand que SD. La purge opérée a donc bien "effacé" l'influence d'un empoisonnement du pot par les oxydes de soufre, sur le diagnostic de l'état de fonctionnement du pot, suivant le but poursuivi par la présente invention.

Typiquement, au cycle n, postérieur au cycle m, Tpauvre retourne de nouveau en dessous du seuil SPS, ce qui provoque une nouvelle purge en SOx.

Si à la suite de cette purge, au cycle n+1, Tpauvre reste en dessous du seuil SD, le calculateur 3 diagnostique un pot catalytique défaillant, cette défaillance ne pouvant plus être imputée à un empoisonnement du pot par des oxydes de soufre, du fait de cette purge.

Ayant ainsi décrit le principe de la présente invention, on se réfère maintenant à la figure 4 du dessin annexé pour décrire en plus de détails le procédé de diagnostic selon l'invention, tel qu'il est mis en oeuvre par le calculateur 3, chargé du programme dont cette figure représente l'organigramme.

Le programme commence par un contrôle de l'état d'un "drapeau" PS. Quand une purge en oxyde de soufre vient d'avoir lieu PS = 1, dans le cas contraire PS = 0. Si PS = 0, on examine si le moteur fonctionne en mélange pauvre. En cas de fonctionnement du moteur hors mélange pauvre, il est mis fin immédiatement au programme de diagnostic. Dans le cas contraire, le calculateur lit la mesure courante du signal de sortie S1, soit la concentration en NOx des gaz d'échappement sortant du pot 2, et compare cette mesure à la valeur de seuil SN évoquée en liaison avec la figure 2. Si S1 est plus petit que SN le programme se reboucle sur le test de fonctionnement en mélange pauvre ou en mélange riche. Si S1 est plus grand que SN, le calculateur commute la valeur de consigne de la richesse en carburant du mélange air/carburant d'alimentation du moteur à une valeur stoechiométrique ou surstoechiométrique (cf. figure 2, instant t₁) et mesure le temps Tpauvre de fonctionnement en mélange pauvre du moteur, qui s'est écoulé jusqu'à l'instant t₁. Si Tpauvre est supérieur au seuil SPS évoqué en liaison avec la figure 3, le calculateur surveille la purge du pot en NOx qui découle de l'enrichissement du mélange air/carburant, à l'aide du signal S2 de richesse en oxygène des gaz d'échappement, de manière à interrompre cette purge dès que S2 dépasse SR, comme expliqué en liaison avec la figure 2.

Si par contre Tpauvre est plus petit que SPS, (comme au cycle m ou au cycle n de la figure 3), le calculateur commande en outre une purge en oxydes de soufre SOx. On sait que celle-ci exige, d'une part, une alimentation du moteur en mélange riche, et d'autre part, un réchauffage du pot à une température relativement élevée, de l'ordre de 650°C par exemple.

Pour réchauffer le pot à cette température, comme on l'a vu plus haut, le calculateur 3 commande une réduction de l'angle α d'avance à l'allumage du mélange, de manière à provoquer une combustion plus exothermique du mélange. La purge du pot en SOx s'accomplit alors et le drapeau PS passe à 1 à l'achèvement de celle-ci, marquée par le retour du fonctionnement du moteur en mélange pauvre.

On remarquera que le procédé de diagnostic suivant l'invention permet ainsi d'organiser, en fonction de la valeur de Tpauvre, soit seulement une purge du pot en oxydes d'azote, soit une double purge du pot en oxydes d'azote et en oxydes de soufre.

Au retour du fonctionnement du moteur en mélange pauvre, les étapes décrites ci-dessus sont exécutées de nouveau jusqu'au calcul de la valeur de Tpauvre actuel (cycle m+1 ou n+1 de la figure 3). Si, alors, il y a eu antérieurement une purge en SOx (PS = 1) comme décrit ci-dessus, le calculateur compare la valeur de Tpauvre au seuil SD. Suivant que Tpauvre est inférieur ou supérieur SD, le calculateur diagnostique, et signale, un pot catalytique 2 défaillant ou en bon état de fonctionnement, respectivement.

Il apparaît maintenant que l'invention permet bien d'atteindre le but annoncé, à savoir fournir un procédé de diagnostic de l'état de fonctionnement d'un pot catalytique à piégeage des oxydes d'azote, débarrassé de faux diagnostics résultant d'un empoisonnement du pot par les oxydes de soufre, grâce à la purge en oxydes de soufre organisée par le procédé suivant l'invention quand l'efficacité du pot tombe à un niveau tel qu'un empoisonnement de ce type pourrait fausser le diagnostic.

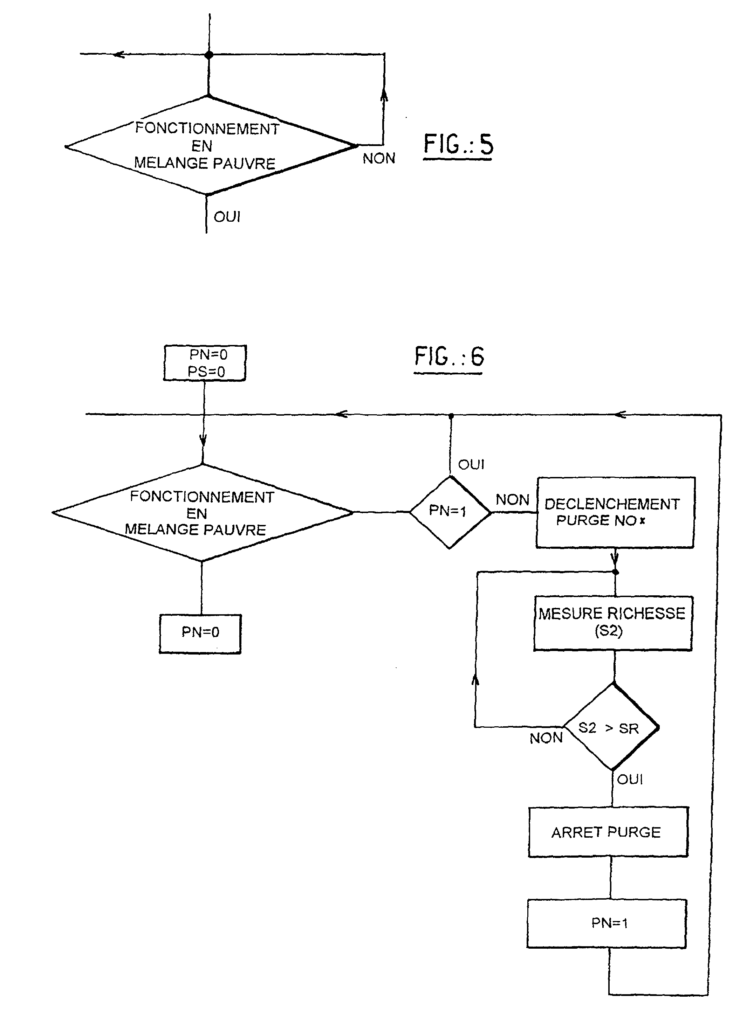

Selon la procédure illustrée par l'organigramme de la figure 4, celle-ci se termine par un diagnostic, après la première purge du pot. Elle s'arrête sans diagnostic quand le moteur cesse de fonctionner en mélange pauvre. Cette absence de diagnostic peut être supprimée en modifiant la partie A de cet organigramme, comme illustré aux figures 5 et 6.

A la figure 5, le test "fonctionnement en mélange pauvre" est rebouclé sur lui-même quand la réponse est non. C'est ce que l'on observe quand le moteur fonctionne avec un mélange air/carburant de richesse 1 ou stoechiométrique. Cette configuration est possible quand on estime que le stockage des oxydes d'azote piégés dans le pot n'est pas sensiblement affecté par un mélange air/carburant de richesse juste stoechiométrique. Le test "fonctionnement en mélange pauvre" est alors répété jusqu'au retour du fonctionnement du moteur en mélange pauvre.

A la figure 6 le programme débute par un test sur deux drapeaux PN et PS mis à 1 ou à 0 suivant qu'il y a eu, ou non, respectivement, purge en SOx ou en NOx, respectivement. Quand on sort du fonctionnement en mélange pauvre, et en l'absence d'une purge antérieure en NOx (PN=0), il y a systématiquement commande d'une telle purge jusqu'à ce que le signal S2 repasse au-dessus du seuil SR. A l'arrêt de la purge le drapeau PN repasse à 1 et il y a rebouclage sur le test de fonctionnement en mélange pauvre.

Cette variante de l'organigramme de la figure 4 convient à la gestion de la purge d'un pot pour lequel un passage à la richesse stoechiométrique du mélange air/carburant d'alimentation du moteur peut affecter l'état du stock d'oxydes d'azote contenu dans le pot.

Bien entendu, l'invention n'est pas limitée aux modes de réalisation décrits et représentés qui n'ont été donnés qu'à titre d'exemple. C'est ainsi que l'état de fonctionnement du pot pourrait être diagnostiqué à partir des évolutions d'une grandeur autre que la durée Tpauvre de fonctionnement en mélange pauvre, dans un cycle de durée totale (Tpauvre + Triche). L'homme de métier comprendra aisément que l'on pourrait tout aussi bien utiliser le temps Triche, la consommation en carburant Cpauvre ou Criche du moteur pendant les temps Tpauvre et Triche respectivement, ou encore l'un des rapports Tpauvre/Triche, Criche/Triche, par exemple.

On pourrait encore utiliser comme critère d'évaluation de l'état de fonctionnement du pot, non pas la position de l'une des grandeurs évoquées ci-dessus par rapport à un seuil, mais la position d'une valeur moyenne (mesurée sur plusieurs cycles consécutifs) de la grandeur par rapport à un seuil. De même le critère pourrait être constitué par un seuil sur la fréquence des purges commandées par le calculateur, ou encore par un seuil sur l'intervalle de temps séparant deux purges consécutives.

De même encore, une purge pourrait être déclenchée par le franchissement d'un seuil par la masse de NOx contenue dans les gaz d'échappement, cumulée sur un intervalle de temps prédéterminé, plutôt que par le franchissement d'un seuil de concentration en NOx desdits gaz d'échappement. La masse cumulée des oxydes d'azote contenue dans ces gaz pourrait alors être calculée en fonction du signal S1 et des conditions de fonctionnement du moteur (régime, pression d'admission, etc...).

## Revendications

1. Procédé de diagnostic de l'état de fonctionnement d'un pot catalytique (2) de traitement des gaz d'échappement d'un moteur (1) à combustion interne, ledit pot (2) comprenant des moyens de stockage d'oxydes d'azote (NOx) lorsque le moteur (1) fonctionne en mélange air/carburant pauvre en carburant, lesdits oxydes d'azote stockés étant libérés et réduits chimiquement quand le moteur (1) fonctionne en mélange riche en carburant, ce procédé étant **caractérisé en ce que** :
a) on mesure une grandeur (Tpauvre) représentative de la capacité du pot (2) à stocker des oxydes d'azote lorsque le moteur (1) fonctionne en mélange pauvre,
b) on commande une purge du pot (2) en oxydes d'azote seuls ou, à la fois, en oxydes d'azote (NOx) et en oxydes de soufre (SOx) suivant que ladite capacité est supérieure ou inférieure à un premier seuil prédéterminé (SPS) et
c) on mesure de nouveau ladite grandeur prédéterminée, après ladite purge, et on diagnostique une défaillance du pot (2), ou le bon état de fonctionnement de ce pot, suivant la position de cette mesure par rapport à un deuxième seuil prédéterminé (SD).

2. Procédé conforme à la revendication 1, **caractérisé en ce que**, avant l'étape a), on mesure la quantité (S1) d'oxydes d'azote contenue dans les gaz d'échappement à la sortie du pot (2) et on la compare à un troisième seuil (SN) prédéterminé, et **en ce que**, à l'étape a) on mesure ladite grandeur (Tpauvre) si ladite quantité (S1) est supérieure au troisième seuil (SN).

3. Procédé conforme à la revendication 2, **caractérisé en ce que** le troisième seuil (SN) est relatif à la concentration en oxydes d'azote des gaz d'échappement ou à une masse cumulée desdits oxydes, mesurée sur un intervalle de temps prédéterminé.

4. Procédé conforme à l'une quelconque des revendications 2 et 3, **caractérisé en ce que**, si la quantité (S1) d'oxydes d'azote contenue dans les gaz d'échappement à la sortie du pot est inférieure au troisième seuil (SN) on revient à l'étape a) si le moteur fonctionne en mélange pauvre (figure 4).

5. Procédé conforme à l'une quelconque des revendications 1 à 4, **caractérisé en ce que**, si le moteur (1) ne fonctionne pas en mélange pauvre, on revient à un test portant sur ce fonctionnement (figure 5).

6. Procédé conforme à l'une quelconque des revendications 1 à 4, **caractérisé en ce que**, si le moteur (1) ne fonctionne pas en mélange pauvre et que le pot (2) ne vient pas de subir une purge en oxydes d'azote (NOx), on commande une telle purge (figure 6).

7. Procédé conforme à l'une quelconque des revendications 1 à 6, **caractérisé en ce que** ladite grandeur représentative de la capacité dudit pot (2) à stocker des oxydes d'azote est choisie parmi : les temps (Tpauvre) ou (Triche) de fonctionnement successifs en mélange pauvre ou riche, respectivement, du moteur (1), la consommation (Cpauvre) ou (Criche) du moteur pendant lesdits temps de fonctionnement (Tpauvre) et (Triche), le rapport (Tpauvre/Triche), le rapport (Criche/Triche), le rapport (Criche/Cpauvre).

8. Procédé conforme à l'une quelconque des revendications 1 à 7, **caractérisé en ce qu'**on remplace la mesure de ladite grandeur par la valeur moyenne de plusieurs mesures successives, par la fréquence des purges ou par l'intervalle de temps entre deux purges successives.

9. Dispositif pour la mise en oeuvre du procédé conforme à l'une quelconque des revendications 1 à 8, **caractérisé en ce qu'**il comprend des moyens (4) pour délivrer des signaux (S1) et (S2) représentatifs, respectivement des quantités d'oxydes d'azote (NOx) et d'oxygène (O₂) contenues dans les gaz d'échappement sortant du pot catalytique (2), des moyens de calcul (3) alimentés par lesdits signaux (S1,S2) pour en déduire 1) des signaux de commande de la richesse (R) en carburant du mélange air/carburant d'alimentation du moteur (1) et de l'avance à l'allumage (α) dudit mélange, propres à commander sélectivement une purge du pot (2) en oxyde d'azote seuls ou une purge du pot (2) à la fois en oxydes d'azote et en oxyde de soufre, lesdits moyens de calcul (3) comprenant en outre moyens d'exécution d'un programme de diagnostic de l'état de fonctionnement du pot (2) faisant sélectivement intervenir lesdites purges.

## Claims

1. A diagnostic method for the operating condition of a catalytic converter (2) processing the exhaust gases from an internal combustion engine (1), this converter (2) comprising means for storing nitrogen oxides (NOx) when the engine (1) is operating with an air/fuel mixture which is lean in fuel, the stored nitrogen oxides being released and chemically reduced when the engine (1) is operating with a mixture which is rich in fuel, which method is **characterised in that**:
a) a magnitude (Tlean) representative of the ability of the converter (2) to store nitrogen oxides when the engine (1) is operating with a lean mixture is measured;
b) a purge from the converter (2) of nitrogen oxides alone or of both nitrogen oxides (NOx) and sulphur oxides (SOx) is performed depending on whether this ability is higher or lower than a first predetermined threshold (SPS);
c) this predetermined magnitude is measured again, after the purge, and the defectiveness of the converter (2), or the correct operation of this converter, is diagnosed depending on the position of this measurement with respect to a second predetermined threshold (SD).

2. A method as claimed in claim 1, **characterised in that**, prior to stage a), the quantity (S1) of nitrogen oxides contained in the exhaust gases being discharged from the converter (2) is measured and compared with a third predetermined threshold (SN), and **in that**, at stage a), the magnitude (Tlean) is measured if this quantity (S1) is greater than the third threshold (SN).

3. A method as claimed in claim 2, **characterised in that** the third threshold (SN) relates to the nitrogen oxide concentration of the exhaust gases or to a cumulated mass of these oxides measured over a predetermined period of time.

4. A method as claimed in any one of claims 2 and 3, **characterised in that**, if the quantity (S1) of nitrogen oxides contained in the exhaust gases being discharged from the converter is lower than the third threshold (SN), stage a) is repeated if the engine is in lean mixture operation (Fig. 4).

5. A method as claimed in any one of claims 1 to 4, **characterised in that** if the engine (1) is not in lean mixture operation, a test in respect of such operation is repeated (Fig. 5).

6. A method as claimed in any one of claims I to 4, **characterised in that** if the engine (1) is not in lean mixture operation and the converter (2) has not just undergone a nitrogen oxide (NOx) purge, such a purge is commanded (Fig. 6).

7. A method as claimed in any one of claims 1 to 6, **characterised in that** the magnitude representative of the capacity of the converter (2) to store nitrogen oxides is chosen from the successive operating times (Tlean) or (Trich) of the engine (1) with a lean or rich mixture respectively, the consumption (Clean) or (Crich) of the engine during the operating times (Tlean) and (Trick), the ratio (Tlean/Trich), the ratio (Crich/Trich) and the ratio (Crich/Clean).

8. A method as claimed in any one of claims I to 7, **characterised in that** the measurement of this magnitude is replaced by the mean value of a plurality of successive measurements, by the frequency of the purges or by the time interval between two successive purges.

9. A device for the implementation of the method as claimed in any one of claims. 1 to 8, **characterised in that** it comprises means (4) for the supply of signals (S1) and (S2) representative respectively of the quantities of nitrogen oxides (NOx) and oxygen (O₂) contained in the exhaust gases discharged from the catalytic converter (2), computer means (3) receiving these signals (S1, S2) in order to deduce therefrom control signals for the fuel richness (R) of the air/fuel mixture supplying the engine (I) and the ignition advance (α) of the mixture, able selectively to command a purge of the converter (2) of nitrogen oxides alone or a purge of the converter (2) of both nitrogen and sulphur oxides, the computer means (3) further comprising means for performing a diagnostic program of the state of operation of the converter (2) selectively causing these purges to take place.

## Patentansprüche

1. Verfahren zur Diagnose des Betriebszustands eines mit einem Katalysator versehenen Auspufftopfes (2) für die Behandlung der Abgase eines Verbrennungsmotors (1), wobei der Auspufftopf (2) eine Anordnung zur Ablagerung von Stickoxiden (NOx) aufweist, wenn der Motor mit einem mageren Luft/Kraftstoff-Gemisch betrieben wird und wobei die abgelagerten Stickoxide freigesetzt und chemisch reduziert werden, wenn der Motor (1) mit einem fetten Gemisch betrieben wird, **dadurch gekennzeichnet, dass**:
a) eine Größe (Tmager) gemessen wird, die das Aufnahmevermögen des Auspufftopfes (2) für die Ablagerung der Stickoxide darstellt während des Betriebes des Motors (1) mit einem mageren Gemisch,
b) eine Reinigung des Auspufftopfes (2) von den Stickoxiden allein oder von den Stickoxiden (NOx) zusammen mit den Schwefeloxiden (SOx) durchgeführt wird, je nachdem, ob das Speichervermögen größer oder kleiner als ein vorgegebener Schwellwert (SPS) ist und
c) die vorgegebene Größe erneut gemessen wird nach der Reinigung, wonach eine Fehlfunktion des Auspufftopfes (2) oder seine gute Wirkungsweise festgestellt wird, je nach dem Ergebnis dieser Messung bezüglich eines zweiten vorgegebenen Schwellwertes (SD).

2. Verfahren nach Anspruch 1, **dadurch gekennzeichnet, dass** vor dem Schritt a) die Menge (S1) an Stickoxiden gemessen wird, die in den Abgasen am Ausgang des Auspufftopfes (2) vorhanden ist, dass diese Menge mit einem dritten vorgegebenen Schwellwert (SN) verglichen wird und dass im Schritt a) die Größe (Tmager) gemessen wird, wenn die Menge (S1) größer als der dritte Schwellwert (SN) ist.

3. Verfahren nach Anspruch 2, **dadurch gekennzeichnet, dass** der dritte Schwellwert (SN) die Konzentration an Stickoxiden in den Abgasen oder eine kumulierte Masse dieser Oxyde darstellt, die über eine vorgegebene Zeitdauer messen wurde.

4. Verfahren nach einem der Ansprüche 2 und 3, **dadurch gekennzeichnet, dass**, wenn die Menge (S1) der in den Abgasen am Ausgang des Auspufftopfes vorhandenen Stickoxide kleiner als der dritte Schwellwert (SN) ist, zum Schritt a) zurück gekehrt wird, wenn der Motor mit einem mageren Gemisch betrieben wird ( Figur 4 ).

5. Verfahren nach einem der Ansprüche 1 bis 4, **dadurch gekennzeichnet, dass**, wenn der Motor (1) nicht mit einem mageren Gemisch betrieben wird, zu einer Untersuchung zurück gekehrt wird hinsichtlich seiner Betriebsweise ( Figur 5 ).

6. Verfahren nach einem der Ansprüche 1 bis 4, **dadurch gekennzeichnet, dass**, wenn der Motor (1) nicht mit einem mageren Gemisch betrieben wird und keine vorhergehende Reinigung von den Stickoxiden im Auspufftopf (2) durchgeführt worden ist, diese Reinigung ausgelöst wird ( Figur 6 ).

7. Verfahren nach einem der Ansprüche 1 bis 6, **dadurch gekennzeichnet, dass** die das Aufnahmevermögen des Auspufftopfes (2) für die Ablagerung der Stickoxide darstellende Größe ausgewählt wird aus: den Zeitdauern (Tmager) oder (Tfett) für den aufeinanderfolgenden Betrieb des Motors (1) mit einem mageren bzw. fetten Gemisch, dem Verbrauch (Cmager) oder (Cfett) des Motors während dieser Zeitdauern (Tmager) und (Tfett), dem Verhältnis (Tmager/Tfett), dem Verhältnis (Cfett/Tfett) und dem Verhältnis (Cfett/Cmager).

8. Verfahren nach einem der Ansprüche 1 bis 7, **dadurch gekennzeichnet, dass** die Messung dieser Größe durch den Mittelwert mehrerer aufeinanderfolgender Messungen ersetzt wird, durch die Frequenz der Reinigungen oder durch das Zeitintervall zwischen zwei aufeinanderfolgenden Reinigungen.

9. Vorrichtung zur Durchführung des Verfahrens nach einem der Ansprüche 1 bis 8, **dadurch gekennzeichnet, dass** sie eine Anordnung (4) aufweist zur Erzeugung von Signalen (S1) und (S2), die die Mengen an Stickoxiden (NOx) bzw. an Sauerstoff (O₂) in den aus dem mit einem Katalysator versehenen Auspufftopf (2) austretenden Abgasen darstellen, eine Rechenanordnung (3), der diese Signale (S1,S2) zugeführt werden um daraus die Steuersignale für die Anreicherung (R) an Kraftstoff im Luft/Kraftstoff-Gemisch für die Versorgung des Motors (1) und den Winkel (α) der Vorzündung für das Gemisch abzuleiten für das wahlweise Reinigen des Auspufftopfes (2) von den Stickoxiden allein oder von den Stickoxiden und den Schwefeloxiden zusammen, wobei die Rechenanordnung (3) außerdem eine Anordnung zur Durchführung eines Diagnoseprogramms für den Betriebszustand des Auspufftopfes (2) aufweist, das die wahlweise Durchführung dieser Reinigungen bestimmt.
